# EUROPEAN PATENT SPECIFICATION

(11) **EP 2 182 372 B1**
(45) Date of publication and mention of the grant of the patent: **04.01.2012**
(21) Application number: 08168270.0
(22) Date of filing: 04.11.2008
(51) Int. Cl.: G01P 13/00

(54) **Detection of vehicle moving direction**
Erfassung der Bewegungsrichtung eines Fahrzeugs
Détection de la direction de déplacement d'un véhicule

(43) Date of publication of application: 05.05.2010
(73) Proprietor: Volvo Car Corporation, 405 31 Göteborg (SE)
(72) Inventor: Bengtsson, Mattias, SE-413 04, GÖTEBORG (SE); Nordström, Jan, SE-417 03, GÖTEBORG (SE)
(74) Representative: Mossmark, Anders Lennart

(56) References cited:
- EP-A- 1 764 580
- WO-A-02/062640
- US-A1- 2006 030 992
- US-B1- 7 319 927

## Description

### TECHNICAL FIELD

The present invention relates to a method and a system for detection of a moving direction of a vehicle. It also relates to a vehicle control system and a vehicle.

### BACKGROUND ART

Modern vehicle uses safety systems for advanced controlling of the vehicle and certain operating states. Such a safety system is for instance an obstacle detection system which can be used for motion planning for vehicle on the road. Such systems do not aim explicitly to create a fully autonomous car. Instead they are seen as incremental stepping-stones in that direction. Many of the technologies will serve as components of any future driverless car — meanwhile they are being marketed as gadgets that assist human drivers in one way or another. This approach is slowly trickling into standard cars. Driver-assistance mechanisms are of several distinct types, sensorial-informative, actuation-corrective, and systemic.

In order for such safety systems to operate properly, it is of most importance to detect the vehicle moving direction. Some systems should preferably only be activated when the vehicle is moving forward, above a certain vehicle speed.

There are different systems available for detecting the vehicle moving direction. They all deal with the problem of correctly detecting of the moving direction of a vehicle. Since the cost of sensors has to be kept low, there is a challenge to use the standard sensors (such as the wheel sensors) for detecting the moving direction.

US 5267166 disclose a vehicle direction detecting device, which has a wheel speed calculating device for calculating the speed and acceleration Aw of a vehicle. A gravity accelerometer is also provided for calculating a gravitationally detected acceleration Am. When Aw and Am increase or decrease simultaneously, it is determined that the vehicle is travelling forward, and when one of Aw and Am increases while the other decreases, it is determined that the vehicle is travelling in reverse. To detect this feature, a calculating system is provided to form differential values Daw and Dam from accelerations Aw and Am. The vehicle travel direction is estimated using the differential values Daw and Dam. The problem with this solution is that the algorithm will have problems to detect the moving direction when the inclination of the road on which the vehicle travels changes rapidly.

For active safety functions for low speed collision mitigation by braking, it is important to sufficiently detect the vehicle moving direction. A detection of the direction, only using the gear level position is possible but may not be sufficient in all situations. For instance, when a vehicle is positioned on a sloping road, the vehicle may move backwards at slow speed even if the gear lever is in position Drive.

### SUMMARY OF THE INVENTION

The object of the present invention is therefore to detect the moving direction of the vehicle being equipped with an active safety function for low speed collision mitigation by braking.

In order to solve the above disclosed object, the present invention according to claim 1 relates to a method for detection of a moving direction of a vehicle. The vehicle comprises at least one wheel driven by a prime mover via a transmission. The method comprises the step of determining the moving direction of the vehicle at least on the basis of the vehicle speed and the inclination of the vehicle.

The method may comprise a step of determining the inclination at least on the basis of the acceleration of the vehicle. The inclination may be determined at least on the basis of a first vehicle longitudinal acceleration value determined on the basis of at least one wheel sensor. The inclination may furthermore be determining at least on the basis of a second vehicle longitudinal acceleration value determined on the basis of at least one accelerometer.

The method may comprise a step of determining the inclination at least on the basis of a previous determination of the moving direction.

The method may comprise a step of determining at least one threshold for the vehicle speed on the basis of the inclination of the vehicle. The method may further determine a first threshold value for indicating if the vehicle is moving forward and a second threshold value for indicating if the vehicle is moving reverse. The threshold may be determined at least on the basis of a previous determination of the moving direction. The threshold may be defined in a look-up table. The moving direction may be determined at least on the basis of the threshold. The direction may furthermore be determined at least by comparing the vehicle speed with the threshold.

The vehicle speed may be determined on the basis of at least one wheel sensor.

The moving direction may furthermore be determined at least on the basis of a transmission value determined in the basis of a transmission control unit.

The moving direction may furthermore be determined by setting a vehicle moving state value. The moving state value may then be set to a first value when the moving state value indicates that the vehicle direction is forward and set to a second value if there is no such indication.

In order to solve the above disclosed object, the present invention according to claim 16 relates to in a system for detecting a vehicle moving direction. The system is arranged to perform the method according to any of the claims 1 - 15. The object is also solved by means of a vehicle control system comprising the system according to claim 16. It is finally solved by means of a vehicle comprising the system according to claim 17.

A main advantage with the present invention is that the inclination is also considered when determining the moving direction. When the vehicle speed is higher than a speed threshold value the traction force of the vehicle has overcome the inclination. This consequently indicates that the vehicle is moving in a certain direction.

One advantage of the present invention is that standard sensors can be used for a correct detection of the moving direction of the vehicle. Required demands set by other systems in the car can be achieved since for instance the wheel standard sensors are part of the braking system, which already fulfils these demands.

Another advantage is that the detection of the moving direction only needs to be performed once. When the moving direction is detected, it does not need to be detected again until the speed detected by the wheel sensors has been 0 or very low.

Since the acceleration detected by the accelerometer is compensated for the acceleration detected by the wheel sensors, the detection of the inclination is improved. Moreover, the vehicle does not need to stand still when detecting the inclination.

### BRIEF DESCRIPTION OF THE DRAWINGS

In the following text the invention will be described in detail with reference to the attached drawings. These drawings are used for illustration only and do not in any way limit the scope of the invention:
Figure 1 shows the top layer of a system for detecting a vehicle moving direction.
Figure 2 shows a subsystem for determining the inclination of a vehicle.
Figure 3 shows a subsystem for approximating the inclination on the basis of the acceleration.
Figure 4 shows a subsystem of a conditional rate limiter in the subsystem according to figure 2.
Figure 5 shows a chart for determining the Vehicle Moving State.

### DETAILED DESCRIPTION

The invention will now be described in detail with reference to embodiments described in the detailed description and shown in the drawings. The embodiments of the invention with further developments described in the following are to be regarded only as examples and are in no way to limit the scope of the protection provided by the patent claims.

The present invention relates to a method and system for detection of a moving direction of a vehicle. It could be any type of vehicle such as a car or a truck. The vehicle comprises at least one wheel which is driven by a prime mover via a transmission. A prime mover could be an internal combustion engine and/or a hybrid system and/or an electrical motor. The transmission has the role of converting the speed of the prime mover to the speed of the wheels.

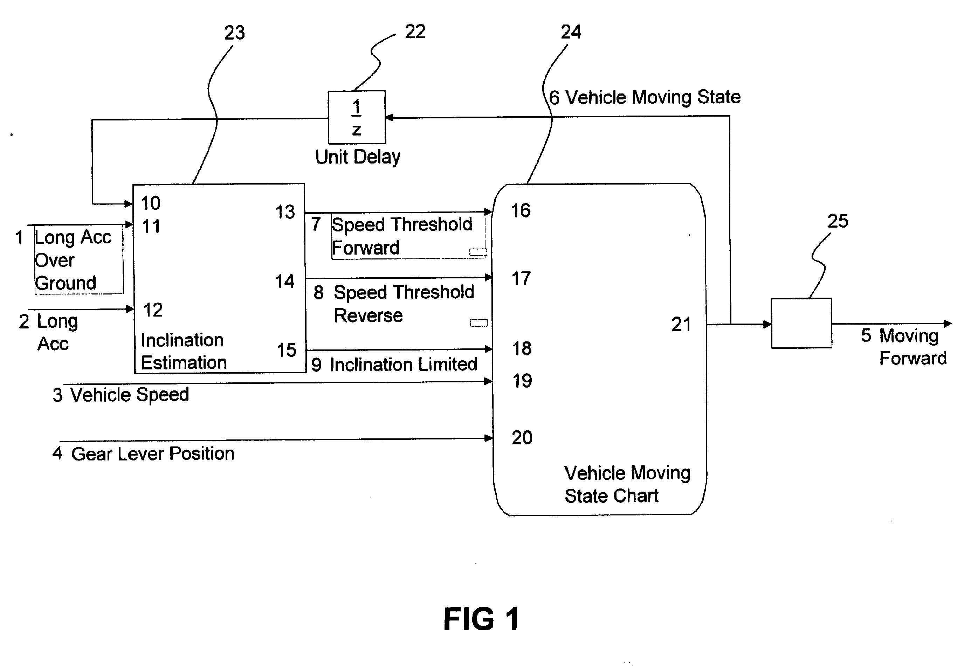

Figure 1 shows the top layer of an embodiment of a system for detecting the moving direction of a vehicle. The system comprises a first subsystem 23 called Inclination Estimation. This subsystem at least determines the inclination of the vehicle, as will be described more in detail later. The system also comprises a subsystem 24 called Vehicle Moving State Chart. This subsystem detects the Vehicle Moving State, as will be described more in detail later.

The system according to the present invention determines the moving direction of the vehicle at least on the basis of a vehicle speed and an inclination of the vehicle, as will be described below.

This method is intended to be used in vehicles with a torque converter. The vehicle is only equipped with a single wheel speed sensor, which at low speed cannot detect the direction of the vehicle. When the gear lever position is in drive or reverse and the road on which the vehicle drives is sloping (the inclination of the vehicle), the converter will only allow a certain speed contrary to the lever position. For instance, if the lever is in drive and the road is sloping upwards, the torque converter will not allow the vehicle to move backwards at a speed which exceeds a certain forward threshold speed.

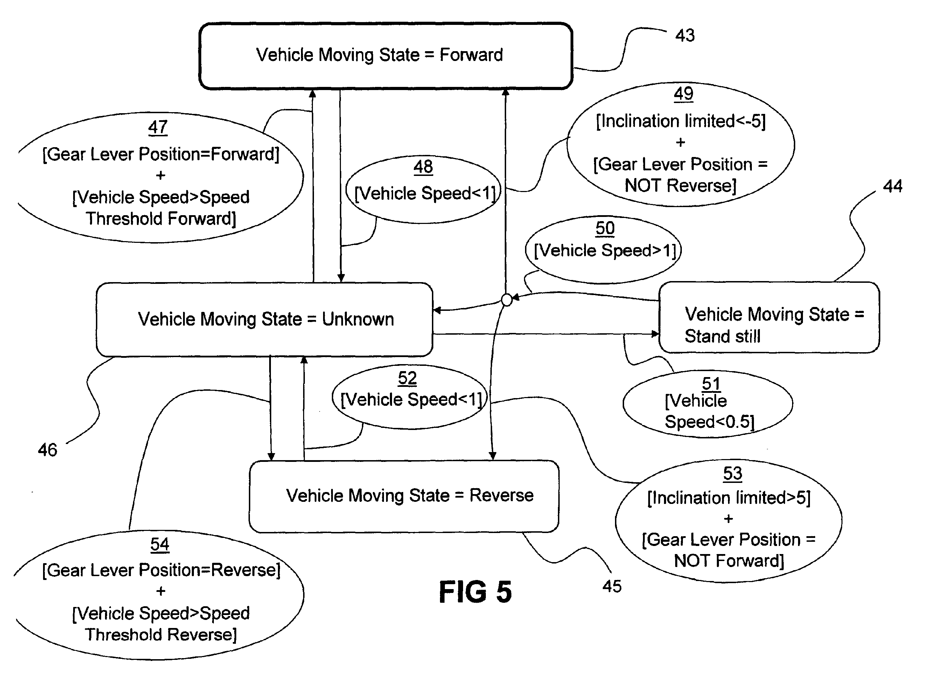

With the method, when this speed is exceeded, it will be concluded that the vehicle is moving forwards. If the lever instead is in reverse, the threshold speed is lower and if this speed is exceeded, the method will conclude that the vehicle is moving backwards. The method will be described more in detail later with reference to figures 5 - 6.

The subsystem Inclination Estimation 23 determines the inclination at least on the basis of the acceleration of the vehicle. In particular the inclination is determined at least on the basis of a first vehicle longitudinal acceleration value determined on the basis of at least one wheel sensor. There are preferably two wheel sensors on at least one of the wheels. The first acceleration value is named Long Acc Over Ground 1, see figure 1, and this value is fed into the subsystem Inclination Estimation 23.

The subsystem 23 also determines the inclination at least on the basis of a second vehicle longitudinal acceleration value determined on the basis of at least one accelerometer. The second acceleration value is named Long Acc 2 and this value is also fed into the subsystem Inclination Estimation. There is preferably at least one accelerometer in the vehicle.

The subsystem 23 also determines the inclination at least on the basis of a previous determination of the moving direction. The value of the previous determination is named Vehicle Moving State 6. The Vehicle Moving state value is inverted 22 before fed into the Inclination Estimation subsystem 23.

The subsystem Inclination Estimation 23, apart from determining the inclination, also determines at least one threshold for the vehicle speed on the basis of the inclination of the vehicle. The subsystem also determines the threshold on the basis of the previous determination of the moving direction, the value named Vehicle Moving State 6. This value will be discussed later in relation to figure 5. The system according to the present invention also determines the moving direction at least on the basis of the threshold, which will be described more in detail in relation to figure 5.

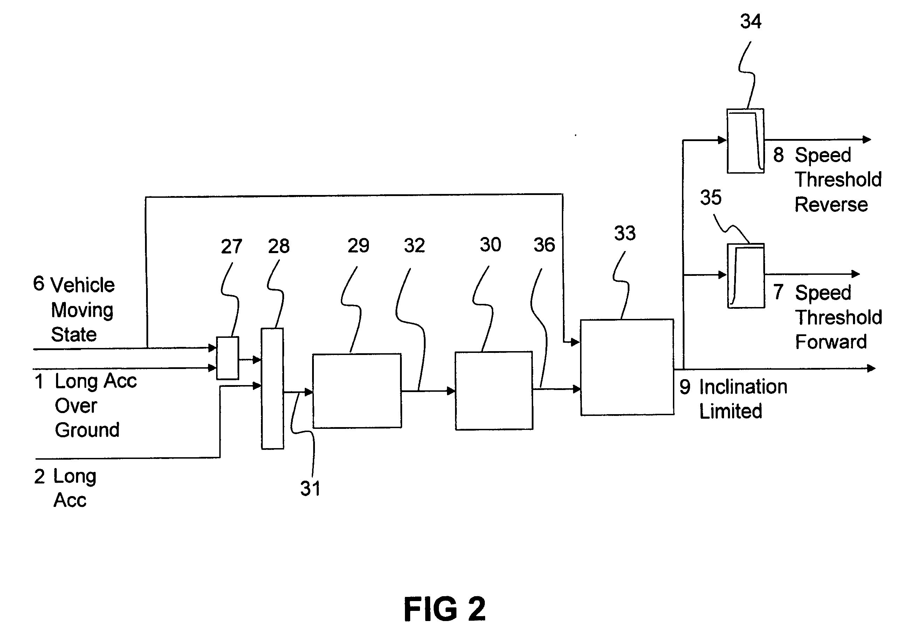

Figure 2 shows an embodiment of the subsystem Inclination Estimation 23, used for calculating the inclination and the threshold. In the subsystem the gravitational force acting on the vehicle in the longitudinal direction (signal 31) is estimated with the difference between Long Acc 2 (Acceleration determined on the basis of an accelerometer) and Long Acc Over Ground 1 (Acceleration determined on the basis of a wheel sensor). Long Acc Over Ground 1 is reduced from Long Acc 2 in a subtract unit 28 which results in the remaining acceleration. When the vehicle is moving in reverse direction (backwards) the sign of Long Acc Over Ground 1 shall be the opposite and when the vehicle stands still Long Acc Over Ground 1 shall be equal to Long Acc 2. The feedback value Vehicle Moving State 6 is used to set the direction of Long Acc Over Ground 1. The direction is set in the multiplication unit 27.

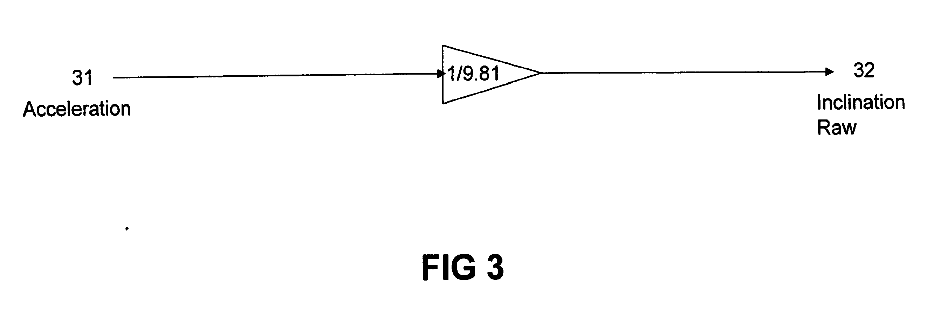

With help from the remaining acceleration, the vehicle inclination 32 can be estimated, which is done in unit 29. The estimated inclination 32 is affected by measurement noise and therefore a low pass filter 30 with suitable cut-off frequency is preferably applied and a filter inclination value 36 is created. When the inclination is between -15% and +15%, the inclination 32 can be estimated by the acceleration 31, if the acceleration is measured in gravitational force. This is illustrated in figure 3 where the acceleration is compensated with 9.81 (the G-value).

A conditional rate limiter 33 is used due to the uncertainties of the inclination when the value of Vehicle Moving State (the vehicle moving direction) is unknown. In order to avoid a too low estimation of the inclination, only an increase of the estimated inclination 36 (filtered value) is allowed when the moving direction is unknown. Moreover, a decrease of the estimated inclination 36 shall not be reflected when the Vehicle Speed is compared to the thresholds (will be described in relation to figure 5).

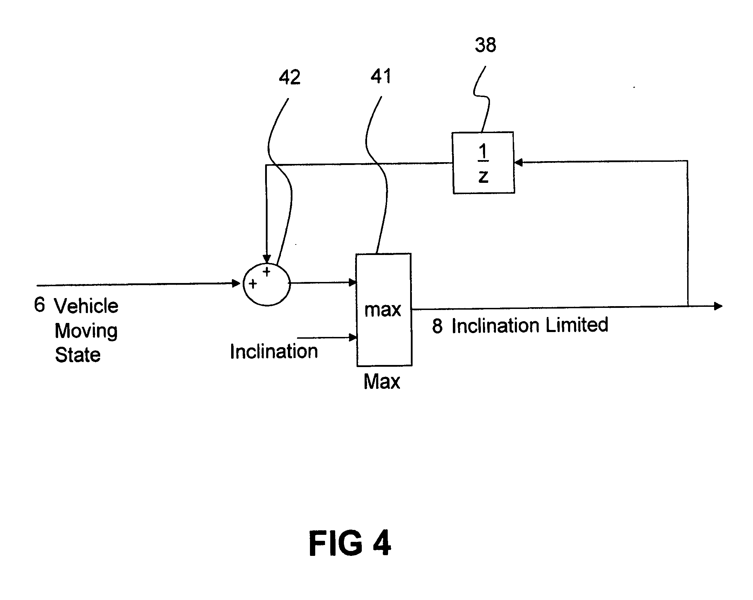

Figure 4 shows an embodiment of a conditional rate limiter. The limiter according to figure 4 fulfils the requirements for the limiter 33. If the moving direction is unknown (controlled in unit 42), the current estimated inclination 36 is compared in unit 41 with a previous determination of the inclination, named Inclination limited 9 (see figure 2). Inclination limited is inverted in 38. The moving direction relates to a previous determination of the moving direction. The value of the previous determination is named Vehicle Moving State 6. This value will be discussed later in relation to figure 5. The maximum value of the inclination is determined and chosen in unit 41 as the value Inclination limited 8. If the value of the Vehicle Move State is not 0 the logic is not effective.

On the basis of the value Inclination limited, a first threshold value for indicating if the vehicle is moving forward and a second threshold value for indicating if the vehicle is moving reverse is determined. The threshold/-s are defined in a look-up table 34,35. The threshold values are defined as Speed Threshold Reverse 8 and Speed Threshold Forward 7 (see figure 1 and 2).

The determination of the moving direction of the vehicle, at least on the basis of the vehicle speed and the inclination of the vehicle, will now be described. The determination performed by the subsystem Vehicle Moving State Chart 24 is shown in figure 5. The input values to the chart 24 from the subsystem Inclination Estimation are Speed Threshold Reverse 8, Speed Threshold Forward 7 and Inclination limited 9, which have all been described. Moreover, a Vehicle Speed value 3 and a Gear Lever Position value 4 are input into the chart. The Vehicle Speed value is determined on the basis of at least one wheel sensor.

The Gear Lever Position value 4 indicates the lever position in the automatic transmission. For instance, when the lever is positioned into "Drive" position, this results in a first value and if the lever is in "Reverse" position this results in a second value. The value may then for instance be 3 when the lever is in the "Drive" position and 1 when the lever is in the "Reverse Position".

The moving direction is at least determined by comparing the vehicle speed with the threshold. The vehicle speed is represented by the Vehicle Speed value 3, while the threshold is represented by the Speed Threshold Reverse 8 and Speed Threshold Forward 7 values. The comparing will soon be described. Moreover, the moving direction is at least determined on the basis of a transmission value determined in the basis of a transmission control unit. The transmission value is represented by the Gear Lever Position value 4. The transmission control unit may for instance be positioned in the automatic transmission for control or in the manual transmission for indicating the gear lever position.

In figure 5, there are four different operating states 43,44,45,46 indicated. Each of these is represented by a value for Vehicle Moving State 6. The operating states indicate the moving direction of the vehicle and when certain conditions are fulfilled (will soon be described), the chart determines that the vehicle is in a certain state.

The method is intended to be used in vehicles with a torque converter and a single wheel speed sensor, which at low speed cannot detect the direction of the vehicle. When the gear lever position is in drive or reverse and the road on which the vehicle drives is sloping (the inclination of the vehicle), the converter will only allow a certain speed contrary to the lever position (with zero throttle). If the lever is in Drive and the road is sloping upwards, the torque converter will not allow the vehicle to move backwards at a speed which exceeds a certain forward threshold speed. When this speed is exceeded, it will be concluded that the vehicle is moving forwards. If the lever instead is in reverse, the threshold speed is lower and if this speed is exceeded, the method will conclude that the vehicle is moving backwards.

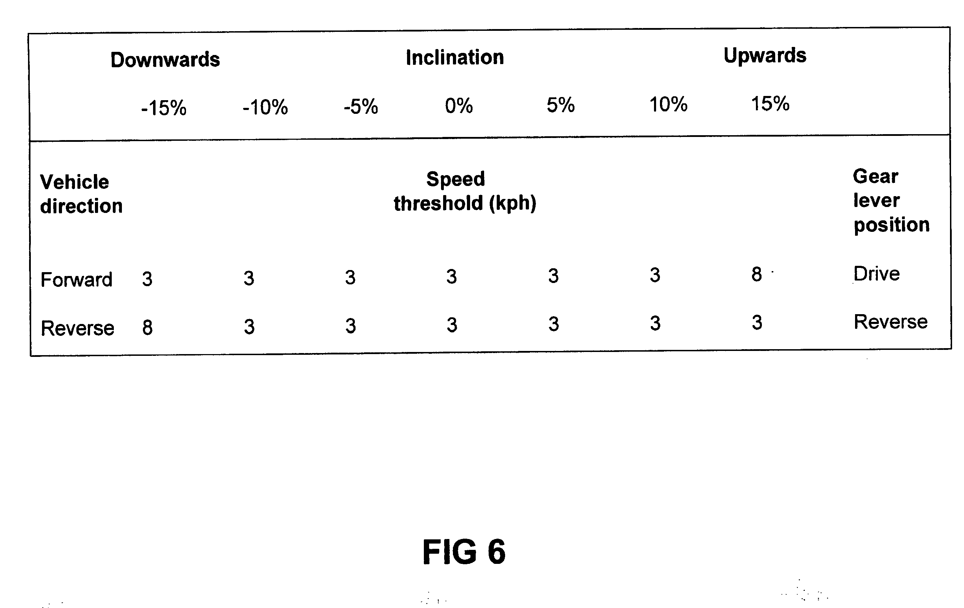

Referring now to figures 5 and 6. When the vehicle moves forward, the Vehicle Moving State value 6 is set to Forward. In the chart the state is indicated by 43. The value Forward may also be represented by a number, for instance 3. The value 6 is set to Forward when one of two certain conditions is fulfilled. One of these conditions 47 is when the Gear Lever Position value 4 is Forward (or 3) and the Vehicle Speed value 3 is higher than the Speed Threshold Forward value 7.

The Speed Threshold Forward value 7 is set in the subsystem Inclination Estimation 23 and is dependent on the inclination of the road. This reflects the properties of the torque converter. As illustrated in figure 6, when the Gear Lever Position is in Drive, the value Speed Threshold Forward value 7 is 3kph for all inclinations except around 15% (upwards sloping) where the value is 8 kph. This means that the torque converter, in Drive, when the road is sloping significantly upwards will allow the vehicle to move backwards. To compensate for this situation, the speed has to be larger before it can be estimated that the vehicle is moving forward. This condition is tested when the vehicle is in an unknown state indicated by 46. The value of the Vehicle Operating State 6 is then Unknown, or represented by number.

The other condition 49 is when the Inclination limited value 9 is less than a certain value (here the threshold is -5) and the Gear Lever Position value is NOT "Reverse" (or not 1). This condition is tested when the vehicle is in a stand still state, indicated by 44, and the Vehicle Operating State value is Stand still, or represented by a number. The Vehicle Speed value 3 also has to be higher than a certain value (for instance 1), condition 50. The NOT "Reverse" condition refers to the fact that a vehicle standing still may roll on Neutral Gear Lever Position, and if the road is sloping, the vehicle must (because of the gravitation) move along the sloping road.

When the vehicle moves backwards, the Vehicle Moving State value 6 is set to Reverse. In the chart the state is indicated by 45. The value Reverse may also be represented by a number, for instance 2. The value 6 is set to Reverse when one of two certain conditions is fulfilled. One of these conditions 54 is when the Gear Lever Position value 4 is Reverse (or 1) and the Vehicle Speed value 3 is higher than the Speed Threshold Reverse value 8.

The Speed Threshold Reverse value 8 is also set in the subsystem Inclination Estimation 23 and dependent on the inclination of the road. As illustrated in figure 6, when the Gear Lever Position is in Reverse, the value Speed Threshold Reverse value 8 is 3kph for all inclinations except around -15% (downwards sloping) where the value is 8 kph. This means that the torque converter, in Reverse, when the road is sloping significantly downwards will allow the vehicle to move forward. To compensate for this situation, the speed has to be larger before it can be estimated that the vehicle is moving backwards. This condition is also tested when the vehicle is in the unknown state 46.

The other condition 53 is when the Inclination limited value 9 is higher than a certain value (here 5, but this could be any value) and the Gear Lever Position value is NOT "Forward" (or not 3). This condition is also tested when the vehicle is in the stand still state 44 and the Vehicle Speed value 3 is higher than a certain value (for instance 1), condition 50. The NOT "Forward" condition also refers to the fact that a vehicle standing still may roll on Neutral Gear Lever Position, and if the road is sloping, the vehicle must (because of the gravitation) move along the sloping road.

The inclination is consequently considered when determining the moving direction. When the value 3 is higher than the values 7 or 8, the traction force of the vehicle has overcome the inclination. This consequently indicates that the vehicle is moving backwards or forward.

Figure 5 also indicates what happens if other conditions 48 and 49 are fulfilled. When the value of Vehicle Speed 3 is below a certain value (for instance 1), the state is changed to unknown 46. This condition is tested when the vehicle is moving forward (state 43) or backward (state 45). Furthermore, figure 5 also indicates that if the condition 51 is fulfilled (Vehicle Speed below a certain value, for instance 0.5), the state is changed to Stand still 44.

The moving direction is consequently determined by setting a vehicle moving state value 6. When certain condition is fulfilled a certain state 43,44,45,46 is set. The Vehicle Moving State value 6, representing the state, is then used when determining the acceleration and the inclination as has been described in relation to figures 1 - 4.

The Vehicle Moving State value 6 is also used, see figure 1, to set a Moving Forward value 5. This value 5 is the out signal from the system and it may for instance be used by a safety system which should only be activated when the vehicle is moving forward, above a certain vehicle speed. In particular, the Moving Forward value 5 is set to a first value (for instance 1) when the moving state value 6 indicates that the vehicle direction is forward and set to a second value (for instance 0) if there is no such indication. An indication could for instance be that the Vehicle Moving State value 6 is 3, or Forward. The control of the state is performed by unit 25.

## Claims

1. Method for detection of a moving direction of a vehicle, the vehicle comprising at least one wheel driven by a prime mover via an automatic transmission, the method comprising a step of:
- determining the moving direction of the vehicle at least on the basis of the vehicle speed, the inclination of the vehicle, and whether a gear lever is in drive or reverse position;
- determining the inclination from a differential acceleration measurement derived from the difference in acceleration values recorded from a wheel speed sensor and an accelerometer;
- setting at least one threshold for the vehicle speed on the basis of the inclination of the vehicle,
wherein a first threshold value is set for indicating if the vehicle is moving forward when the gear lever is in the drive position and a second threshold value is set for indicating if the vehicle is moving in reverse when the gear lever is in the reverse position.

2. Method according to claim 1 comprising the step of determining the inclination at least on the basis of the acceleration of the vehicle,

3. Method according to claim 2 comprising a step of determining the inclination at least on the basis of a first vehicle longitudinal acceleration value determined on the basis of at least one wheel sensor.

4. Method according to any of the claims 2-3 comprising a step of determining the inclination at least on the basis of a second vehicle longitudinal acceleration value determined on the basis of at least one accelerometer.

5. Method according to any of the preceding claim comprising a step of determining the inclination at least on the basis of a previous determination of the moving direction.

6. Method according to claim 1 comprising a step of determining the threshold at least on the basis of a previous determination of the moving direction.

7. Method according to claims 1 or 6 wherein the threshold is defined in a look-up table.

8. Method according to any of the claims 1, 6 or 7 comprising a step of determining the moving direction at least on the basis of the threshold.

9. Method according to claim 8 comprising a step of determining the moving direction at least by comparing the vehicle speed with the threshold.

10. Method according to any of the preceding claims wherein the vehicle speed is determined on the basis of at least one wheel sensor.

11. Method according to any of the preceding claims comprising a step of determining the moving direction at least on the basis of a transmission value determined in the basis of a transmission control unit.

12. Method according to any of the preceding claims wherein the moving direction is determined by setting a vehicle moving state value.

13. Method according to claim 12 comprising a step of setting a moving forward value to a first value when the moving state value indicates that the vehicle direction is forward and setting the forward value to a second value if there is no such indication.

14. System for detection of a moving direction of a vehicle, the vehicle comprising at least one wheel driven by a prime mover via an automatic transmission, the system comprising;
- means for determining the moving direction of a vehicle at least on the basis of the vehicle speed, the inclination of the vehicle, and whether a gear lever is in drive or reverse position;
- means for determining the inclination from a differential acceleration measurement derived from the difference in acceleration values recorded from a wheel speed sensor and an accelerometer;
- means for setting at least one threshold for the vehicle speed on the basis of the inclination of the vehicle, wherein a first threshold value is set for indicating if the vehicle is moving forward when the gear lever is in the drive position and a second threshold value is set for indicating if the vehicle is moving in reverse when the gear lever is in the reverse position.

15. Vehicle control system comprising the system according to claim 14.

16. Vehicle comprising the system according to claim 15.

## Patentansprüche

1. Verfahren zur Erfassung einer Bewegungsrichtung eines Fahrzeugs, das mindestens ein durch eine Antriebsmaschine über ein Automatikgetriebe angetriebenes Rad aufweist, mit den Schritten:
- Bestimmen der Bewegungsrichtung des Fahrzeugs und zwar zumindest auf Grundlage der Fahrzeuggeschwindigkeit, der Neigung des Fahrzeugs und ob ein Ganghebel in einer Fahr- oder Rückwärtsposition ist,
- Bestimmen der Neigung aus einer Beschleunigungsdifferenzmessung, die von einer Differenz von aufgenommenen Beschleunigungswerten eines Radgeschwindigkeitssensors und eines Beschleunigungsmessers abgeleitet wird,
- Einstellen mindestens eines Grenzwerts für die Fahrzeuggeschwindigkeit auf Grundlage der Neigung des Fahrzeugs,
wobei ein erster Grenzwert eingestellt wird, um anzugeben, ob das Fahrzeug sich nach vorne bewegt, wenn der Ganghebel in der Fahrposition ist und ein zweiter Grenzwert eingestellt wird, um anzugeben, ob das Fahrzeug sich rückwärts bewegt, wenn der Ganghebel in der Rückwärtsposition ist.

2. Verfahren gemäß Anspruch 1 mit dem Schritt des Bestimmens der Neigung und zwar zumindest auf Grundlage der Beschleunigung des Fahrzeugs.

3. Verfahren gemäß Anspruch 2 mit einem Schritt des Bestimmens der Neigung und zwar zumindest auf Grundlage eines ersten Fahrzeuglängsbeschleunigungswerts, der auf Grundlage von zumindest einem Radsensor bestimmt wird.

4. Verfahren gemäß einem der Ansprüche 2-3 mit einem Schritt des Bestimmens der Neigung und zwar zumindest auf Grundlage eines zweiten Fahrzeuglängsbeschleunigungswerts, der auf Grundlage von zumindest einem Beschleunigungsmesser bestimmt wird.

5. Verfahren gemäß einem der vorstehenden Ansprüche mit einem Schritt des Bestimmens der Neigung und zwar zumindest auf Grundlage einer vorhergehenden Bestimmung der Bewegungsrichtung.

6. Verfahren gemäß Anspruch 1 mit einem Schritt des Bestimmens des Grenzwerts und zwar zumindest auf der Grundlage einer vorhergehenden Bestimmung der Bewegungsrichtung.

7. Verfahren gemäß Anspruch 1 oder 6, bei dem der Grenzwert in einer Referenztabelle definiert ist.

8. Verfahren gemäß einem der Ansprüche 1, 6 oder 7 mit einem Schritt des Bestimmens der Bewegungsrichtung und zwar zumindest auf Basis des Grenzwerts.

9. Verfahren gemäß Anspruch 8 mit einem Schritt des Bestimmens der Bewegungsrichtung und zwar zumindest durch Vergleich der Fahrzeuggeschwindigkeit mit dem Grenzwert.

10. Verfahren gemäß einem der vorstehenden Ansprüche, bei dem die Fahrzeuggeschwindigkeit auf Grundlage von mindestens einem Radsensor bestimmt wird.

11. Verfahren gemäß einem der vorstehenden Ansprüche, mit einem Schritt des Bestimmens der Bewegungsrichtung und zwar zumindest auf Grundlage eines Getriebewerts, der auf Grundlage einer Getriebereglereinheit bestimmt wird.

12. Verfahren gemäß einem der vorstehenden Ansprüche, bei dem die Bewegungsrichtung durch Einstellen eines Fahrzeugbewegungszustandswerts bestimmt wird.

13. Verfahren gemäß Anspruch 12, mit einem Schritt des Einstellens eines Werts einer Vorwärtsbewegung auf einen ersten Wert, wenn der Bewegungszustandswert angibt, dass die Fahrzeugrichtung vorwärts ist und Einstellen des Vorwärtswerts auf einen zweiten Wert, wenn keine derartige Angabe vorhanden ist.

14. System zum Detektieren einer Bewegungsrichtung eines Fahrzeugs mit zumindest einem durch eine Kraftmaschine über ein Automatikgetriebe angetriebenes Rad, mit:
- einem Mittel zum Bestimmen der Bewegungsrichtung eines Fahrzeugs und zwar zumindest auf Grundlage der Fahrzeuggeschwindigkeit, der Neigung des Fahrzeugs und ob ein Ganghebel in einer Fahr- oder Rückwärtsposition ist,
- einem Mittel zum Bestimmen der Neigung über eine Beschleunigungsdifferenzmessung, die von der Differenz von aufgenommenen Beschleunigungswerten eines Radgeschwindigkeitssensors und eines Beschleunigungsmessers abgeleitet ist,
- einem Mittel zum Einstellen von mindestens einem Grenzwerts für die Fahrzeuggeschwindigkeit auf Grundlage der Neigung des Fahrzeugs, wobei ein erster Grenzwert eingestellt wird, um anzugeben, ob das Fahrzeug sich vorwärts bewegt, wenn der Ganghebel in der Fahrposition ist und ein zweiter Grenzwert eingestellt wird, um anzugeben, ob das Fahrzeug sich rückwärts bewegt, wenn der Ganghebel in der Rückwärtsposition ist.

15. Fahrzeugregelsystem mit dem System gemäß Anspruch 14.

16. Fahrzeug mit dem System gemäß Anspruch 15.

## Revendications

1. Procédé de détection de la direction de déplacement d'un véhicule, le véhicule comprenant au moins une roue entraînée par un moteur d'entraînement par l'intermédiaire d'une boîte de vitesses automatique, le procédé comprenant les étapes consistant à :
- déterminer la direction de déplacement du véhicule au moins sur la base de la vitesse du véhicule, de l'inclinaison du véhicule, et de la position du levier de changement de vitesses dans la position marche avant ou dans la position marche arrière ;
- déterminer l'inclinaison à partir d'une mesure d'accélération différentielle obtenue à partir de la différence des valeurs d'accélération enregistrées par un capteur de vitesse de roue et par un accéléromètre ;
- régler au moins un seuil de la vitesse du véhicule sur la base de l'inclinaison du véhicule ;
dans lequel une première valeur de seuil est réglée de façon à indiquer si le véhicule se déplace vers l'avant lorsque le levier de changement de vitesses se trouve dans la position marche avant et une seconde valeur de seuil est réglée de façon à indiquer si le véhicule se déplace vers l'arrière lorsque le levier de changement de vitesses se trouve dans la position marche arrière.

2. Procédé selon la revendication 1, comprenant l'étape consistant à déterminer l'inclinaison au moins sur la base de l'accélération du véhicule.

3. Procédé selon la revendication 2, comprenant une étape consistant à déterminer l'inclinaison au moins sur la base d'une première valeur d'accélération longitudinale du véhicule déterminée sur la base d'au moins un capteur de vitesse de roue.

4. Procédé selon la revendication 2 ou la revendication 3, comprenant une étape consistant à déterminer l'inclinaison au moins sur la base d'une seconde valeur d'accélération longitudinale du véhicule déterminée sur la base d'au moins un accéléromètre.

5. Procédé selon l'une quelconque des revendications précédentes, comprenant une étape consistant à déterminer l'inclinaison au moins sur la base d'une détermination précédente de la direction de déplacement.

6. Procédé selon la revendication 1, comprenant une étape consistant à déterminer le seuil au moins sur la base d'une détermination précédente de la direction de déplacement.

7. Procédé selon la revendication 1 ou la revendication 6, dans lequel le seuil est défini dans une table de consultation.

8. Procédé selon l'une quelconque des revendications 1, 6 ou 7, comprenant une étape consistant à déterminer la direction de déplacement au moins sur la base du seuil.

9. Procédé selon la revendication 8, comprenant une étape consistant à déterminer la direction de déplacement au moins en comparant la vitesse du véhicule avec le seuil.

10. Procédé selon l'une quelconque des revendications précédentes, dans lequel la vitesse du véhicule est déterminée sur la base d'au moins un capteur de vitesse de roue.

11. Procédé selon l'une quelconque des revendications précédentes, comprenant une étape consistant à déterminer la direction de déplacement au moins sur la base d'une valeur de boîte de vitesses déterminée dans la base d'une unité de commande de boîte de vitesses.

12. Procédé selon l'une quelconque des revendications précédentes, dans lequel la direction de déplacement est déterminée en réglant une valeur d'état de déplacement du véhicule.

13. Procédé selon la revendication 12, comprenant une étape consistant à régler une valeur vers l'avant du déplacement à une première valeur lorsque la valeur d'état de déplacement indique que la direction du véhicule est vers l'avant et à régler la valeur vers l'avant à une seconde valeur en l'absence d'une telle indication.

14. Système de détection de la direction de déplacement d'un véhicule, le véhicule comprenant au moins une roue entraînée par un moteur d'entraînement par l'intermédiaire d'une boîte de vitesses automatique, le système comprenant :
- des moyens destinés à déterminer la direction de déplacement d'un véhicule au moins sur la base de la vitesse du véhicule, de l'inclinaison du véhicule, et de la position du levier de changement de vitesses dans la position marche avant ou dans la position marche arrière ;
- des moyens destinés à déterminer l'inclinaison à partir d'une mesure d'accélération différentielle obtenue à partir de la différence des valeurs d'accélération enregistrées par un capteur de vitesse de roue et par un accéléromètre ;
- des moyens destinés à régler au moins un seuil de la vitesse du véhicule sur la base de l'inclinaison du véhicule, dans lequel une première valeur de seuil est réglée de façon à indiquer si le véhicule se déplace vers l'avant lorsque le levier de changement de vitesses se trouve dans la position marche avant et une seconde valeur de seuil est réglée de façon à indiquer si le véhicule se déplace vers l'arrière lorsque le levier de changement de vitesses se trouve dans la position marche arrière.

15. Système de commande de véhicule comprenant le système selon la revendication 14.

16. Véhicule comprenant le système selon la revendication 15.
